# EUROPÄISCHE PATENTANMELDUNG

(11) **EP 1 156 385 A2**
(43) Veröffentlichungstag der Anmeldung: **21.11.2001**
(21) Anmeldenummer: 01111090.5
(22) Anmeldetag: 09.05.2001
(51) Int. Cl.: G03G 15/01

(54) **Verfahren und Vorrichtung zur digitalen Steuerung eines Elements einer Druckmaschine sowie Druckmaschine**

(30) Priorität: 17.05.2000 US 204971 P
(71) Anmelder: NexPress Solutions LLC, Rochester, New York 14653-5007 (US)
(72) Erfinder: Hunold, Heiko, 24107 Kiel (DE); Metzler, Patrick, Dr., 24214 Gettorf (DE); Sing, Gerhard, 24105 Kiel (DE); Liston, Christopher, 24105 Kiel (DE); Wagner, Lutz, 24149 Kiel (DE)
(74) Vertreter: Weber, Walter, Dipl.-Ing.(FH)

(57) **Zusammenfassung**

Die Erfindung betrifft ein Verfahren, eine Vorrichtung und eine Druckmaschine (1) mit einer Steuereinrichtung (8, 8', 8", 8"') zur digitalen Steuerung eines Elements der Druckmaschine (1), wobei eine Zuordnung (6, 6') zweier nicht übereinstimmender digitaler Größen (2 und 2') erfolgt.

Der Fehler einer derartigen Zuordnung (6, 6') kann dadurch gering gehalten werden, daß für aneinanderreihende Zuordnungen (6, 6') eine ganzzahlige Zuordnung (6, 6') von kleinen Schritten (3) einer ersten Größe (2) zu einem großen Schritt (3') einer zweiten Größe (2') derart erfolgt, daß für jede Zuordnung (6, 6') das Zahlenverhältnis so verändert wird oder gleichbleibt, daß der Zuordnungsfehler (4, 4') die Breite (5) der kleineren Schritte (3) der ersten Größe (2) bei keiner Zuordnung (6, 6') erreicht.

## Beschreibung

Die Erfindung betrifft ein Verfahren zur digitalen Steuerung eines Elements einer Druckmaschine mit Zuordnung zweier nicht übereinstimmender digitaler Größen sowie eine Vorrichtung und eine Druckmaschine mit einer Steuereinrichtung zur Durchführung des Verfahrens.

Bei Steuerungen von Druckmaschinen müssen vielfach Größen einander zugeordnet werden. Ein Beispiel dafür ist die Zuordnung von Bildpunktzeilen zu Winkelstellungen der Bildzylinder; es gibt jedoch viele weitere Beispiele solcher Zuordnungen. Da man für die bessere Berechenbarkeit derartige Größen oftmals digitalisiert, besteht das Problem, daß sie sich einander nur ganzzahlig vielfach zuordnen lassen, diese ganzzahlige Zuordnung nicht aufgeht und deshalb mit einem Fehler behaftet ist. Handelt es sich jedoch bei den einander zuzuordnenden Größen um mehrere aufeinander folgende Zuordnungen, so summiert sich ein derartiger Fehler auf. Da für die Begrenzung des Rechenaufwands die Schrittgröße der Digitalisierung einer Größe nicht zu klein gewählt werden soll, tritt somit das Problem auf, daß die ganzzahlige Zuordnung bei mehreren sich aneinanderreihenden Zuordnungen schließlich zu einem Fehler führt, dessen Größe nicht mehr tolerierbar ist.

Der Erfindung liegt daher die Aufgabe zugrunde, eine digitale Steuerung eines Elements einer Druckmaschine derart auszubilden, daß der Fehler bei der Zuordnung zweier nicht übereinstimmender digitaler Größen auch dann gering gehalten wird, wenn mehrere sich aneinanderreihende Zuordnungen erfolgen.

Die Aufgabe wird bezüglich des Verfahrens dadurch gelöst, daß für aneinanderreihende Zuordnungen eine ganzzahlige Zuordnung von kleinen Schritten einer ersten Größe zu einem großen Schritt einer zweiten Größe derart erfolgt, daß für jede Zuordnung das Zahlenverhältnis so verändert wird oder gleichbleibt, daß der Zuordnungsfehler die Breite der kleineren Schritte der ersten Größe bei keiner Zuordnung erreicht.

Bezüglich der Vorrichtung und der Druckmaschine wird die Aufgabe dadurch gelöst, daß die Steuereinrichtung derart ausgebildet ist, daß sie für eine aneinanderreihende Zuordnung von zwei nichtübereinstimmenden digitalen Größen eine ganzzahlige Zuordnung der kleinen Schritte der ersten Größe zu einem großen Schritt der zweiten Größe so vornimmt, daß das Zahlenverhältnis derart verändert wird oder gleichbleibt, daß der Zuordnungsfehler die Breite der kleineren Schritte der ersten Größe bei keiner Zuordnung erreicht.

Der Grundgedanke der Erfindung besteht darin, daß bei der Zuordnung kleinerer Schritte zu größeren Schritten und einer Aneinanderreihung solcher Zuordnungen ein sich vergrößernder Fehlbetrag dadurch ausgeglichen werden kann, daß ab einem bestimmten Fehlbetrag ein Schritt mehr oder ein Schritt weniger zugeordnet wird, so daß der Fehlbetrag einen bestimmten Betrag nicht überschreitet.

Für die konkrete Ausführung gibt es dabei verschieden Möglichkeiten: Beispielsweise können die bei der Zuordnung verbleibenden Reste so lange gesammelt werden, bis ein zusätzlicher Schritt der Größe mit den kleinen Schritten zusammengekommen ist, der dann zusätzlich dem betreffenden Schritt der Größe mit den großen Schritten als Ausgleich zugeordnet wird. Umgekehrt können natürlich auch Fehlbeträge gesammelt und dann ein Schritt weggelassen werden. Für den erstgenannten Fall sieht eine Weiterbildung der Vorrichtung vor, die Steuereinrichtung einen Speicher aufweist, in den bei jeder Zuordnung von den kleineren Schritten der ersten Größe zu den größeren Schritten der zweiten Größe der verbleibende, nicht ganzzahlig aufgehende Rest eingestellt wird und daß die Steuerung bei der Kalkulation der Zuordnung der Schritte der kleineren Größe zum nächsten Schritt der größeren Größe diesen Rest hinzunimmt. Selbstverständlich könnten in derselben Weise auch Fehlbeträge zur Kalkulation der nächsten Zuordnung in den Speicher eingestellt werden. Bei diesen Zuordnungen ist gewährleistet, daß die Zuordnungsfehler nie die Breite der kleineren Schritte erreichen, da dann immer der Zusatzschritt hinzugenommen oder einer weggelassen wird.

Eine Weiterbildung des Verfahrens sieht vor, daß das Zahlenverhältnis der Zuordnung sich derart ändert oder gleichbleibt, daß der Zuordnungsfehler die halbe Breite der digitalen Schritte der kleineren Größe bei keiner Zuordnung überschreitet. Die Vorrichtung zur Durchführung dieser Weiterbildung des Verfahrens sieht vor, daß die Steuereinrichtung derartig ausgebildet ist, daß sie für eine Zuordnung der Schritte die Summe aus dem zuzuordnenden Betrag mit dem Zuordnungsfehler der vorherigen Zuordnung von Schritten bildet und bei Überschreiten des Betrags eines halben kleineren Schritts auf- und bei Unterschreiten des Betrags eines halben kleineren Schritts abrundet. Durch diese Weiterbildung läßt sich der Zuordnungsfehler somit auf maximal den halben Betrag der kleineren Schritte minimieren.

Ein wichtiges Einsatzgebiet der Erfindung ist die Registersteuerung einer Mehrfarbendruckmaschine, wobei die erfindungsgemäße Zuordnung zur Steuerung der Erzeugung von Bildpunktzeilen auf den Bildzylindern durch die ihnen zugeordneten Bilderzeugungseinrichtungen dient. Beispielsweise kann eine Zuordnung von auf den Bildzylindem erzeugten Bildpunktzeilen zu festgelegten Winkelsequenzen der Bildzylinder vorgesehen sein. Auf dies Weise bleibt der Fehler immer geringer als eine Bildpunktzeile oder als eine Winkelsequenz, je nach dem, welche als die Größe mit den kleineren Schritten gewählt ist.

Dabei ist es möglich, daß die Registersteuerung zur Zuordnung der Teilfarbenbilder der Farbdruckwerke die Teilfarbenbilder in Bereiche unterteilt, die so erzeugt werden, daß sie in richtiger Zuordnung zusammentreffen, wenn die Teilfarbenbilder auf ein Drucksubstrat übertragen werden. Dies kann dadurch erreicht werden, daß jeder Bereich aus einer festgelegten Anzahl von Bildpunktzeilen gebildet wird und die Registerhaltigkeit durch die Steuerung der Zuordnung der Zeilen zu den Winkelsequenzen erfolgt.

Dabei kann vorgesehen sein, daß zur Erzielung einer Registerübereinstimmung der von den Farbdruckwerken erzeugten Teilfarbenbilder diese in Bereiche unterteilt sind, die einander zugeordnet werden, wobei die Bereiche aus einer festgelegten Anzahl von Bildpunktzeilen bestehen. Es finden also zwei Zuordnungen statt, die gegenseitige Zuordnung der Bereiche der durch die einzelnen Farbdruckwerke erstellten Teilfarbenbilder und innerhalb eines Bereiches eine Zuordnung der Bildpunktzeilen zu den Winkelsequenzen, wobei letztere mittels der für jeden Bereich berechneten zuzuordnenden Beträge vorgenommen wird, welche einerseits einen Maßstab für die erforderliche Größe eines Bereiches darstellen und andererseits dazu dienen, erfindungsgemäß einen Fehler über den jeweiligen Bereich gleichmäßig zu verteilen, da durch die Zuordnung der Bildpunktzeilen zu den festgelegten Winkelsequenzen eine fehlbetragsverteilende Abstandsänderung der Bildpunktzeilen in optimaler Weise vorgenommen wird.

Für das erfindungsgemäße Prinzip spielt es jedoch keine Rolle, ob mehrere Bildpunktzeilen zu einer Winkelsequenz oder mehrere Winkelsequenzen einer Bildpunktzeile zugeordnet werden. Obwohl die Registerregelung eine große Zahl von Bildpunktzeilen mittels der Bereiche der Teilfarbenbilder sozusagen blockweise einander zuordnet, findet innerhalb dieser Blöcke durch die erfindungsgemäße Zuordnung der Zeilen zu den Winkelsequenzen eine Verteilung der Fehler in einer Art und Weise statt, daß diese in den Drucken nicht mehr sichtbar sind. Dadurch kann der Rechenaufwand gegenüber der Zuordnung einzelner Zeilen erheblich verringert werden, und trotzdem wird es vermieden, daß sichtbare Fehler entstehen. Das Ziel, mit geringem Rechenaufwand eine hohe Druckqualität zu erzielen, wird somit erreicht. Bezüglich der Vorrichtung wird eine Steuerung derart eingerichtet, daß sie die Bilderzeugungseinrichtungen in vorgenannter Weise steuert.

Um die Bilderzeugung unter Zuhilfenahme der erfindungsgemäßen Maßnahme zu steuern, kann die Zuordnung der Bildpunktzeilen zu festgelegten Winkelsequenzen auf einer Erfassung der Positionen von bild- und substrattragenden Elementen beruhen. Weiterhin kann die Berechnung der Zuordnung der Bereiche der Teilfarbenbilder zueinander und die Zuordnung der Bildpunktzeilen zu den Winkelsequenzen auf der Erfassung und Auswertung der Daten von durch die Farbdruckwerke gedruckten Registermarken beruhen. Zweckmäßigerweise wird beides miteinander kombiniert, insbesondere dann, wenn weitere Einflüsse hinzukommen, wie das Bildübertragungsverhalten von Bildübertragungszylindern mit elastischen Oberflächen, die in die Kalkulation der Bilderzeugung einbezogen werden müssen.

Für die Durchführung dieser Verfahrensschritte ist bezüglich der Vorrichtung vorgesehen, daß sie Sensoren zur Positionserfassung von bild- und substrattragenden Elementen aufweist und die Steuereinrichtung derart eingerichtet ist, daß sie die Zuordnung aufgrund der Positionserfassung vornimmt. Weiterhin kann vorgesehen sein, daß die Steuereinrichtung derart eingerichtet ist, daß sie den Druck von Registermarken veranlaßt, wobei ein Sensor zur Erfassung der Registermarken angeordnet ist und die Steuereinrichtung derart eingerichtet ist, daß sie die Daten der Registermarken derart auswertet, daß die Zuordnung der Bereiche der Teilfarbenbilder zueinander zur Erzielung einer Registerübereinstimmung sowie die Zuordnung der Bildpunktzeilen zu Winkelsequenzen zur Fehlerverringerung erfolgt.

Die Erfindung wird nachfolgend anhand der Zeichnung erläutert. Es zeigen
- **Fig. 1**: eine beispielhafte Prinzipskizze zur Erläuterung des erfindungsgemäßen Verfahrens,
- **Fig. 2**: das Arbeitsprinzip einer Mehrfarbendruckmaschine, deren Register mit Hilfe des erfindungsgemäßen Verfahrens eingestellt werden kann,

- **Fig. 3**: ein Ausführungsbeispiel einer Mehrfarbendruckmaschine mit einer Steuereinrichtung,
- **Fig. 4**: eine Einzelheit der Fig. 3 und
- **Fig. 5**: ein Ausführungsbeispiel einer Zuordnung von Bildpunktzeilen, die Bereiche bilden, zu Winkelsequenzen durch eine erfindungsgemäße Steuereinrichtung.

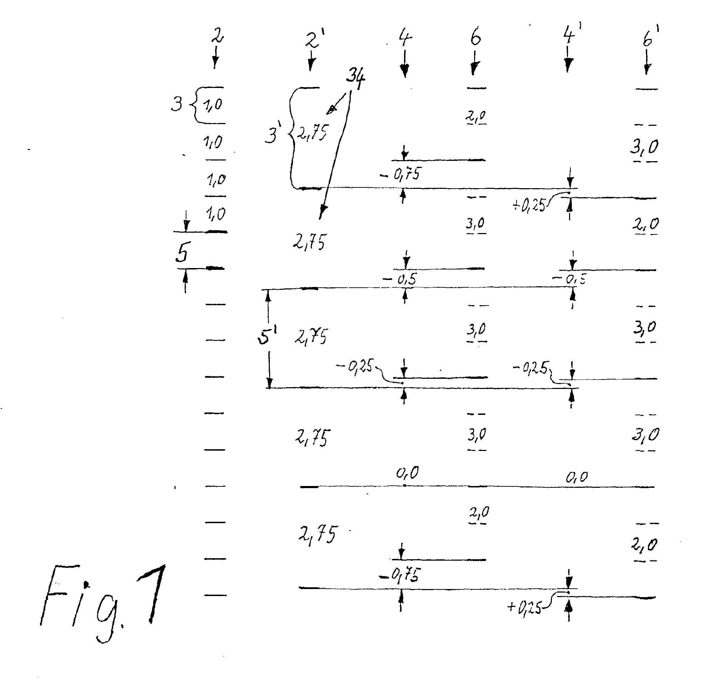

**Fig. 1** zeigt eine Prinzipskizze zur Erläuterung des erfindungsgemäßen Verfahrens. Dabei soll eine erste digitale Größe 2 einer zweiten digitalen Größe 2' zugeordnet werden. Die Schritte 3 der ersten digitalen Größe 2 weisen dabei eine Breite 5 auf, deren Maß beispielhaft mit 1,0 angegeben ist. Die Schritte 3' der zweiten digitalen Größe 2' weisen dagegen eine größere Breite 5' auf, deren Maß mit 2,75 angegeben ist. Dieser zuzuordnende Betrag 34 wurde hier beispielhaft angenommen und ist als Anzahl der Schritte 3 der ersten Größe 2 angegeben, die einem Schritt 3' der zweiten Größe 2' in nicht digitaler Form zugeordnet werden können. Der zuzuordnende Betrag 34 kann dabei natürlich völlig beliebig sein, die angegebenen Werte dienen lediglich zur Veranschaulichung mittels der zeichnerischen Darstellung.

Als Beispiel für eine erfindungsgemäße Zuordnung sind die Zuordnungen 6, 6' dargestellt. Bei der Zuordnung 6 wurden zuerst zwei Schritte 3 der Schrittbreite 5 von 2,0 der ersten Größe 2 der zweiten Größe 2' zugeordnet. Bei dieser Zuordnung entstand ein Zuordnungsfehler 4 von -0,75. Danach wurden drei Schritte 3 der Größe 2 zu einem Schritt 3' der Größe 2' zugeordnet, wobei sich ein Zuordnungsfehler 4 von -0,5 ergab. Danach erfolgte eine Zuordnung von wiederum 2 x drei Schritten 3 mit einem Zuordnungsfehler 4 von zuerst -0,25 und dann mit 0. Danach beginnt diese Zuordnung von vorne. Bei dieser Zuordnung 6 wird also der sich ergebende Rest 4 immer so lange aufsummiert, bis sich ein weiterer ganzer Schritt 3 unterbringen läßt. Auf diese Weise wird der Zuordnungsfehler 4 immer unter der Größe eines Schrittes 3 bleiben, also den Wert 1,0 nie erreichen.

Die Zuordnung 6' zeigt eine andere Methode, bei der jeweils auf- und abgerundet wird, und daher der Fehler 0,5 eines Schrittes 3 nie überschritten wird. In der Darstellung wird zuerst der zuzuordnende Betrag 34 von 2,75 auf 3 aufgerundet, wodurch sich ein Fehlbetrag 4' von +0,25 ergibt. Danach werden zwei Schritte 3 einem Schritt 3' zugeordnet und es entsteht ein Fehlbetrag 4' von -0,5. Danach werden wieder drei Schritte 3 einem Schritt 3' zugeordnet, womit ein Fehlbetrag 4' von -0,25 entsteht. Schließlich erfolgt eine Zuordnung drei Schritten 3, also von 3,0, wobei der Fehlbetrag 0 ist.

Die dargestellten Zuordnungen 4, 4', sind dabei selbstverständlich reine Zahlenbeispiele, im Falle der vorzunehmenden Zuordnungen werden meistens Reihen entstehen, bei denen der Zuordnungsfehler höchstens ausnahmsweise einmal 0 wird. Außerdem können die Unterschiede der zuzuordnenden Schritte 3 und 3' auch wesentlich größer sein.

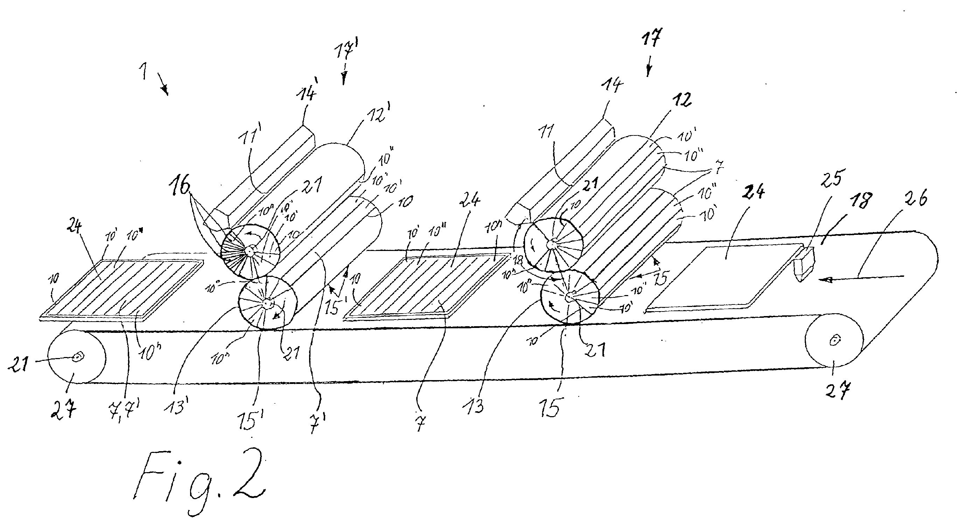

**Fig. 2** zeigt das Prinzip einer Mehrfarbendruckmaschine 1, deren Register erfindungsgemäß eingestellt werden kann. Eine derartige Mehrfarbendruckmaschine 1 besteht in der Regel aus vier und mehr Farbdruckwerken 17, 17', 17", 17"'. Zur Vereinfachung wurden lediglich zwei Farbdruckwerke 17 und 17' dargestellt. Diese Farbdruckwerke 17, 17' verfügen über Bildzylinder 12, 12', ... und über Bilderzeugungseinrichtungen 14, 14', ... zur Erzeugung von Teilfarbenbildern 7, 7', ..., beispielsweise von elektrostatischen latenten Bildern. Diese Teilfarbenbilder 7, 7', ... werden von den Bildzylindern 12, 12', ... auf Bildübertragungszylinder 13, 13', ... übertragen, um dann von diesen Bildübertragungszylindern 13, 13', ... auf Drucksubstrate 24 aufgebracht zu werden. Dabei bringt jedes Farbdruckwerk 17, 17', ... ein Teilfarbenbild 7, 7', ... auf, die zusammen den Farbdruck ergeben.

Die Drucke, deren Register eingestellt werden sollen, haben Bildanfänge 10 und sind in Bereiche 10', 10", ..., 10ⁿ unterteilt, wobei diese Einteilung für jedes Teilfarbenbild 7, 7' vorgenommen wird, um die Erzeugung der Bereiche 10, 10', 10", ..., 10ⁿ derart zu steuern, daß ein registergenaues Übereinanderdrucken sowohl der Bildanfänge 10 als auch der Bereiche 10', 10", ..., 10ⁿ erzielbar ist.

Um diese Registereinstellung zu erzielen, werden die Bilderzeugungseinrichtungen 14, 14', ... derart gesteuert, daß die Bilderzeugungsstellen 11, 11', ... die Bildanfänge 10 und die Bereiche 10', 10", ..., 10ⁿ in solchen Positionen der Bildzylinder 12, 12', ... plazieren, daß die Teilfarbenbilder 7, 7', ... bezüglich aller definierter Bereiche 10, 10', 10", ..., 10ⁿ aufeinandergedruckt werden. Um dies zu erreichen, sind Sensoren 21 für die Positionserfassung aller bild- und substrattragenden Elemente 12, 12', ..., 13, 13', ..., 18 vorgesehen. Weiterhin ist ein Sensor 25 für die Erfassung von Drucksubstraten 24 vorgesehen, der eine entsprechende Meldung an die Steuereinrichtung 8, 8', 8", 8"' gibt.

Die Drucksubstrate 24 werden in Richtung des Pfeils 26 von einem Träger 18 für Drucksubstrate 24 transportiert und an jedem Farbdruckwerk 17, 17' an einer Bild-übertragungsstelle 15' mit einem Teilfarbenbild 7, 7', ... versehen. Den Bildübertragungsstellen 5, 5', ... gegenüberliegend, also an der anderen Seite des Trägers 18, befinden sich noch Gegendruckzylinder, die mechanisch und elektrostatisch die Übertragung der Teilfarbenbilder 7, 7', ... auf die Drucksubstrate 24 unterstützen. Diese Gegendruckzylinder sind der Einfachheit halber nicht dargestellt.

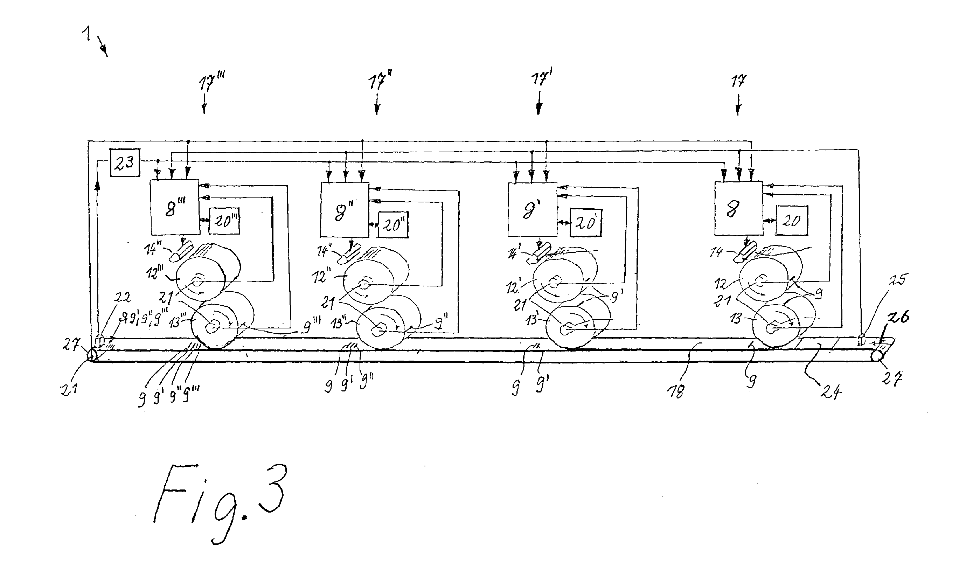

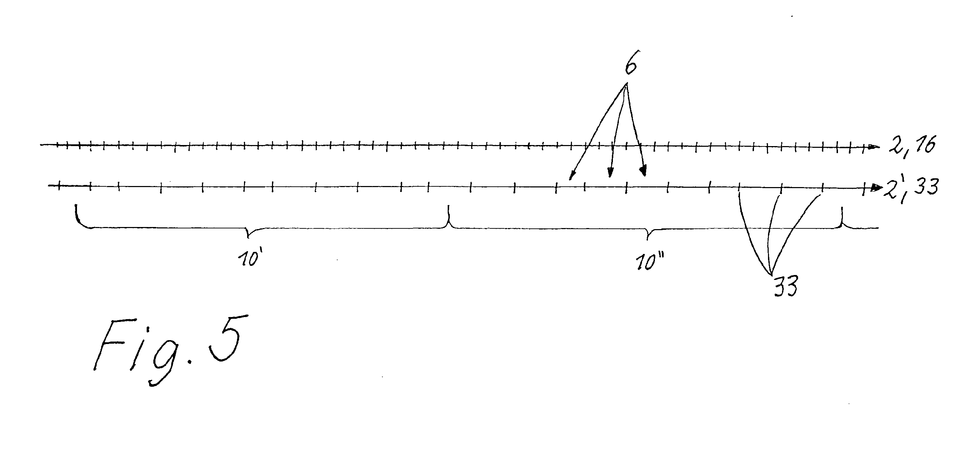

Die dargestellte Ausgestaltung der Erfindung schlägt vor, Bildpunktzeilen 33 der Teilfarbenbilder 7, 7', ... definierten Winkelstellungen 16 der Bildzylinder 12, 12', ... derart zuzuordnen, daß jede Bildpunktzeile 33 einer definierten Winkelsequenz 16 des jeweiligen Bildzylinders 12, 12', ... zugeordnet ist. Dabei sind jedoch nicht die Bildpunktzeilen 33 gezeichnet, da diese dazu zu klein sind, sondern Bereiche 10', 10", ..., 10ⁿ, die aus mehreren Bildpunktzeilen 33 bestehen. Auch die definierten Winkelsequenzen 16 und die definierten Bereiche 10, 10', 10", ..., 10ⁿ sind wesentlich größer gezeichnet, da sie so klein sind, daß sie sich in dieser Weise nicht zeichnerisch darstellen lassen; eine Unterteilung größter Feinheit ist für die Erzielung von Qualitätsdrucken notwendig. Das Prinzip der Zuordnung 6, 6' von Bildpunktzeilen 33 zu Winkelsequenzen 16 entspricht dem zu Fig. 1 erläuterten Prinzip, ein konkretes Beispiel dazu gibt noch die Fig. 5 mit Beschreibung. Für die Steuerung kann noch ein Sensor 22 für die Erfassung von Registermarken 9, 9', 9", 9"' dienen, der in Fig. 3 eingezeichnet und erläutert ist.

**Fig. 3** zeigt ein Ausführungsbeispiel einer Mehrfarbendruckmaschine 1 mit einer Steuereinrichtung 8, 8', 8", 8"', mit der das erfindungsgemäße Verfahren bei einer Registereinstellung angewendet werden kann. Dabei entsprechen Aufbau und Funktionsweise dem oben Beschriebenen. Bei dieser Mehrfarbendruckmaschine 1 ist jedem Farbdruckwerk 17, 17', 17", 17"' eine Einheit 8, 8', 8", 8"' der Steuereinrichtung zugeordnet, die die Bilderzeugungseinrichtungen 14, 14', ... zur Erzeugung der Teilfarbenbilder 7, 7', ... derart steuert, daß die Bilderzeugungsstellen 11, 11', ... so auf den Bildzylindern 12, 12', ... plaziert werden, daß die Teilfarbenbilder 7, 7', ... bei der Übertragung auf ein Drucksubstrat 24 registergenau übereinander gedruckt werden.

Zu diesem Zweck muß ein Maß (zuzuordnender Betrag 34) der Zuordnung 6, 6' von Bildpunktzeilen 33 zu Winkelsequenzen 16 der Bildzylinder 14, 14', 14", 14"' für jeden Bereich 10', 10", ..., 10ⁿ eines Teilfarbenbildes 7, 7', ... gefunden werden. Dazu können Sensoren 21 zur Positionserfassung dienen oder es kann vorgesehen sein, daß Registermarken 9, 9', 9", 9"' gedruckt werden. Dabei druckt jedes Druckwerk 17, 17', 17", 17''' mindestens eine Registermarke 9, 9', 9", 9"'. So wird beispielsweise eine Registermarke 9 von der Bilderzeugungseinrichtung 14 zur Erzeugung des Teilfarbenbildes 7 auf dem Bildzylinder 12 erzeugt und dann mittels des Bildübertragungszylinders 13 auf den Träger 18 übertragen. In entsprechender Weise werden Registermarken 9', 9", 9"' durch die Farbdruckwerke 14', 14", 14''' erstellt. Diese Registermarken 9, 9', 9", 9"' werden mittels eines Sensors 22 erfaßt, und die Daten 23 der Registermarken 9, 9', 9", 9"' an die Steuereinrichtung 8, 8', 8", 8"' gegeben. Mittels dieser Daten 23 lassen sich die Bildanfänge 10 und die Bereiche 10', 10", ..., 10ⁿ der Teilfarbenbilder 7, 7', ... einander zuordnen, wobei bezüglich der Bereiche 10', 10", ..., 10ⁿ deren Größe ermittelt wird, welche für ein registergenaues Aufeinandertreffen der Teilfarbenbilder 7, 7', ... erforderlich ist. Diese Größe eines Bereichs 10', 10", ... oder 10ⁿ wird durch die Erfindung mittels der Zuordnung von Bildpunktzeilen 33 zu Winkelsequenzen 16 derart eingestellt, daß eine möglichst gleichmäßige Fehlbetragsverteilung über den Bereich 10, 10', ... oder 10ⁿ erzielt ist (siehe Fig. 5).

Die Steuereinrichtung 8, 8', 8", 8"', vorzugsweise die jedem Farbdruckwerk 17, 17', 17", 17"' zugeordneten Einheiten, berechnen eine Zuordnung 6, 6', wie sie zu Fig. 1 beschrieben wurde. Zu diesem Zweck können jeweils Speicher 20, 20', 20", 20"' vorgesehen sein, in welche nach jeder Zuordnung 6, 6' von Schritten 3, 3' die Zuordnungsfehler bzw. nicht aufgehenden Reste 4, 4' eingestellt werden, um dann diese in einer der oben beschriebenen Art und Weise bei der Berechnung der nächsten Zuordnung 6, 6' von Schritten 3, 3' der Größen 2, 2' zu berücksichtigen.

Dabei können die Größen 2, 2' auch Winkelsequenzen 16 der Bildzylinder 12', 12", 12"', Bildpunktzeilen 33 und/oder Bereiche 10', 10", ..., 10ⁿ der Teilfarbenbilder 7, 7', ... sein. Selbstverständlich sind auch weitere Zuordnungen 6, 6' möglich, wie beispielsweise Winkelsequenzen 16 der Bildzylinder 12, 12', 12", 12"', Winkelsequenzen der Bildübertragungszylinder 13, 13', 13", 13''' und Winkelsequenzen einer Rolle 27 des Trägers 18 für Drucksubstrate 24. Werden derartige Winkelsequenzen durch Sensoren 21, beispielsweise Winkelstellungsgeber erfaßt, so ist auch auf diesem Weg eine Registereinstellung möglich. Vorzugsweise werden jedoch sowohl die vorgenannten Winkelsequenzen als auch Registermarken 9, 9', 9", 9"' ausgewertet und für eine Registereinstellung herangezogen.

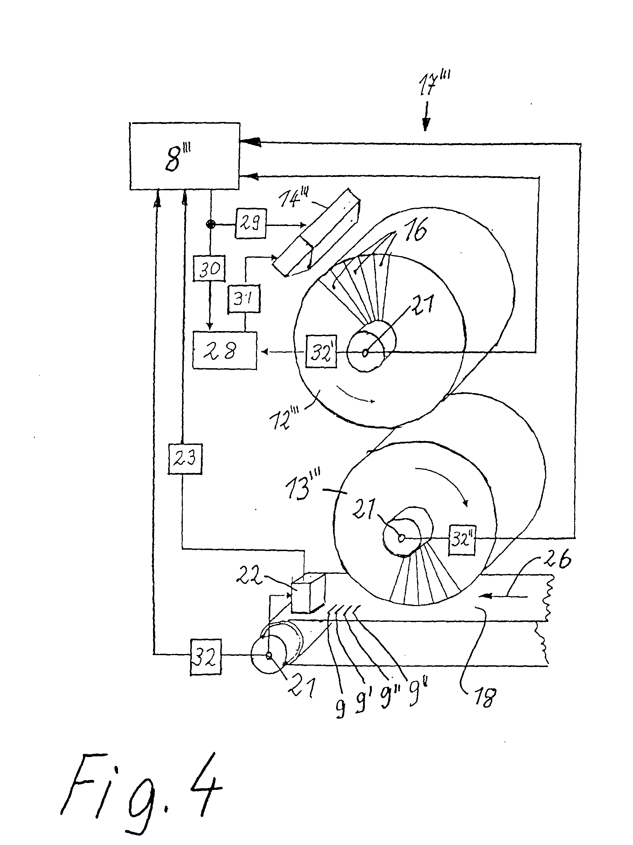

**Fig. 4** zeigt noch eine Einzelheit der Fig. 3, wobei dargestellt ist, daß neben den Daten 23 der Registermarken von den Sensoren 21 Daten 32 über die Positionen des Trägers 18 der Drucksubstrate 24, Daten 32' über Positionen des Bildzylinders 12" und Daten 32" über Positionen des Bildübertragungszylinders 13"' an die Steuereinrichtung 8"' gegeben werden können, um in der vorgenannten Weise die Stellungen dieser bild- und substrattragenden Elemente 12, 12', 12", 12"', 13, 13', 13", 13"' und 18 einander zuzuordnen.

Weiterhin ist eine nähere Ausgestaltung zwischen einer Einheit 8"' der Steuereinrichtung 8, 8', 8", 8"' und einer Bilderzeugungseinrichtung 14"' dargestellt. Dabei ist ein Bildzylinderwinkelteiler 28 vorgesehen, welcher von einem Winkelstellungsgeber 21 die Daten 32' des Bildzylinders 12"' erhält, um die Bildpunktzeilen 33 den Winkelsequenzen 16 zuzuordnen. Dabei wird von der Steuereinrichtung 8"' ein Signal 29 zum Start des Bildanfangs 10 gegeben und gleichzeitig die Daten 30 der Bereiche 10', 10", ..., 10ⁿ des entsprechenden Teilfarbenbildes 7, 7', ... an den Bildzylinderwinkelteiler 28, der diese Daten 30 den Winkelsequenzen 16 zuordnet und dadurch die Stellbefehle 31 an die Bilderzeugungseinrichtung 14"' geben kann, damit diese die Bilderzeugung an den richtigen Bilderzeugungsstellen 11, 11', ... vornimmt.

**Fig. 5** zeigt ein Ausführungsbeispiel einer Zuordnung 6 von Bildpunktzeilen 33 zu Winkelsequenzen 16. Dabei kann beispielsweise jeder definierte Bereich 10', 10", ..., 10ⁿ eine bestimmte Anzahl von Bildpunktzeilen 33 enthalten. Die Zuordnung von zehn Bildpunktzeilen 33 zu den Bereichen 10', ... ist lediglich beispielhaft, tatsächlich werden wesentlich mehr Bildpunktzeilen 33 zugeordnet. Auch die Zuordnung 6, die hier nach dem Beispiel der Fig. 1 dargestellt wurde, kann beliebig erfolgen und kann auch so wie die Zuordnung 6' oder in noch anderer Weise vorgenommen werden.

Damit die Bereiche 10', 10", ..., 10ⁿ der Teilfarbenbilder 7, 7', ... exakt aufeinander abgestimmt werden können, ist die Steuerungseinrichtung 8, 8', 8'', 8"' zweckmäßigerweise derart ausgestaltet, daß sie die zuzuordnenden Beträge 34 für jeden Bereich 10', 10", ..., 10ⁿ berechnet und nach diesen Berechnungen die Zuordnungen 6 der Bildpunktzeilen 33 für jeden Bereich 10', 10", ..., 10ⁿ entsprechend dem jeweils berechneten zuzuordnenden Betrag 34 vorgenommen wird. Auf diese Weise wird erreicht, daß nicht nur die Lage und Größe der Bereiche 10', 10", ..., 10ⁿ exakt ermittelt wird, sondern daß auch die Bildpunktzeilen 33, aus welchen sich die Bereiche 10', 10", ..., 10ⁿ zusammensetzen, jeweils mit einem möglichst geringen Zuordnungsfehler 4, 4' plaziert werden. Auf diese Weise finden also auch innerhalb der Bereiche 10', 10", ..., 10ⁿ die bereits oben erwähnten fehlbetragsverteilenden Abstandsänderungen der Bildpunktzeilen 33 statt.

Selbstverständlich stellt die Fig. 5 lediglich ein Ausführungsbeispiel für eine Zuordnung 6, 6' der Bildpunktzeilen 33 zu Winkelsequenzen 16 dar. Auch andere Zuordnungen sind denkbar, beispielsweise die Zuordnung von mehreren Bildpunktzeilen 33 zu je einer Winkelsequenz 16. Auch können auf diese Art und Weise Bilderzeugungen und Winkelpositionen oder sonstige Einstellungen anderer Elemente von Druckmaschinen vorgenommen werden; die Erfindung ist selbstverständlich nicht auf die Registersteuerung begrenzt, wenn dies auch ein wesentliches Anwendungsgebiet der Erfindung ist.

### Bezugszeichenliste

- 1: Druckmaschine, z.B. Mehrfarbendruckmaschine
- 2, 2': erste und zweite digitale Größe
- 3, 3': Schritte der ersten (kleinere) und zweiten (größere) Größe
- 4, 4': Zuordnungsfehler bzw. nicht aufgehender Rest
- 5, 5': Breite der digitalen Schritte
- 5: kleinere Schritte (erste Größe)
- 5': größere Schritte (zweite Größe)
- 6, 6': Zuordnungen
- 7, 7': Teilfarbenbilder
- 8, 8',8", 8"': Steuereinrichtung, z.B. Registersteuerung mit Einheiten, die den Farbdruckwerken zugeordnet sind
- 9, 9' ,9" ,9"': Registermarken (verschiedener Farbdruckwerke)
- 10,10', 10'',...,10ⁿ: definierte Bereiche der Teilfarbenbilder
- 10: Bildanfänge / Beginn der Bebilderung
- 10',10", ..., 10ⁿ: Bereiche der Teilfarbenbilder, in die die Bildfläche unterteilt ist
- 11, 11', ...: Bilderzeugungsstellen
- 12, 12', 12", 12''': Bildzylinder
- 13,13', 13", 13"': Bildübertragungszylinder
- 14,14', 14",14"': Bilderzeugungseinrichtungen zur Erzeugung von Teilfarbenbildern, beispielsweise von elektrostatischen latenten Bildern
- 15,15', 15'', 15''': Bildübertragungsstellen
- 16: Winkelsequenzen
- 17,17', 17'',17''': Farbdruckwerke
- 18: Träger für Drucksubstrate
- 19,19', 19'', 19''': Registermarken
- 20,20' 20",20"': Speicher
- 21: Sensoren zur Positionserfassung
- 22: Sensor zur Erfassung der Registermarken
- 23: Daten der Registermarken
- 24: Drucksubstrate
- 25: Sensor zur Erfassung von Drucksubstraten
- 26: Pfeil: Transportrichtung der Drucksubstrate
- 27: Rollen des Trägers für Drucksubstrate
- 28: Bildzylinderwinkelteiler
- 29: Signal zum Start des Bildanfangs
- 30: Daten der Bereiche der Teilfarbenbilder
- 31: Startbefehle: Daten 30, den Winkelsequenzen des Bildzylinders zugeordnet
- 32,32',32'': Daten der Winkelstellungsgeber
- 32: Daten des Trägers für Drucksubstrate
- 32': Daten des Bildzylinders
- 32'': Daten des Bildübertragungszylinders
- 33: Bildpunktzeilen
- 34: zuzuordnender Betrag (hier angegeben als Anzahl der Schritte der ersten Größe, die einem Schritt der zweiten Größe in nichtdigitaler Form zugeordnet werden können)

## Patentansprüche

1. Verfahren zur digitalen Steuerung eines Elements einer Druckmaschine (1) mit einer Zuordnung (6, 6') zweier nicht übereinstimmender digitaler Größen (2 und 2'),
**dadurch gekennzeichnet,**
**daß** für aneinanderreihende Zuordnungen (6, 6') eine ganzzahlige Zuordnung (6, 6') von kleinen Schritten (3) einer ersten Größe (2) zu einem großen Schritt (3') einer zweiten Größe (2') derart erfolgt, daß für jede Zuordnung (6, 6') das Zahlenverhältnis so verändert wird oder gleichbleibt, daß der Zuordnungsfehler (4, 4') die Breite (5) der kleineren Schritte (3) der ersten Größe (2) bei keiner Zuordnung (6, 6') erreicht.

2. Verfahren nach Anspruch 1,
**dadurch gekennzeichnet,**
**daß** das Zahlenverhältnis der Zuordnung (6, 6') sich derart ändert oder gleichbleibt, daß der Zuordnungsfehler (4, 4') die halbe Breite (5) der digitalen Schritte (3) der kleineren Größe (2) bei keiner Zuordnung (6, 6') überschreitet.

3. Verfahren nach Anspruch 1 oder 2,
**dadurch gekennzeichnet,**
**daß** es zur Registersteuerung einer Mehrfarbendruckmaschine (1) durch Steuerung der Erzeugung von Bildpunktzeilen (33) verwendet wird.

4. Verfahren nach Anspruch 3,
**dadurch gekennzeichnet,**
**daß** es zur Zuordnung (6, 6') von auf den Bildzylindern (12, 12', 12", 12"') erzeugten Bildpunktzeilen (33) zu festgelegten Winkelsequenzen (16) der Bildzylinder (12, 12', 12", 12"') dient.

5. Verfahren nach Anspruch 4,
**dadurch gekennzeichnet,**
**daß** zur Erzielung einer Registerübereinstimmung der von den Farbdruckwerken (17, 17', 17", 17"') erzeugten Teilfarbenbildern (7, 7', ...) diese in Bereiche (10', 10 10n) unterteilt sind, die einander zugeordnet werden, wobei die Bereiche (10', 10", ..., 10ⁿ) aus einer festgelegten Anzahl von Bildpunktzeilen (33) bestehen.

6. Verfahren nach Anspruch 4 oder 5,
**dadurch gekennzeichnet,**
**daß** die Zuordnung (6, 6') auf der Erfassung der Positionen von bild- und substrattragenden Elementen (12, 12', 12", 12''', 13, 13', 13",18) beruht.

7. Verfahren nach Anspruch 4, 5 oder 6,
**dadurch gekennzeichnet,**
**daß** die Zuordnung der Bereiche (10', 10", ..., 10ⁿ) der Teilfarbenbilder (7, 7', ...) zueinander und die Zuordnung (6, 6') der Bildpunktzeilen (33) zu den Winkelsequenzen (16) auf der Erfassung und Auswertung der Daten (23) von durch die Farbdruckwerke (6, 6', 6', 6"') gedruckten Registermarken (19, 19', 19", 19''') beruht.

8. Vorrichtung zur Durchführung eines Verfahrens nach einem der Ansprüche 1 bis 7 mit einer Steuereinrichtung (8, 8', 8", 8"'),
**dadurch gekennzeichnet,**
**daß** die Steuereinrichtung (8, 8', 8", 8"') derart ausgebildet ist, daß sie für eine aneinanderreihende Zuordnung (6, 6') von zwei nichtübereinstimmenden digitalen Größen (2 und 2') eine ganzzahlige Zuordnung (6, 6') der kleinen Schritte (3) der ersten Größe (2) zu einem großen Schritt (3') der zweiten Größe (2') so vornimmt, daß das Zahlenverhältnis derart verändert wird oder gleichbleibt, daß der Zuordnungsfehler (4, 4') die Breite (5) der kleineren Schritte (3) der ersten Größe (2) bei keiner Zuordnung (6, 6') erreicht.

9. Vorrichtung nach Anspruch 8,
**dadurch gekennzeichnet,**
**daß** die Steuereinrichtung (8, 8', 8", 8''') einen Speicher (20, 20', 20", 20"') aufweist, in den bei jeder Zuordnung (6, 6') von den kleineren Schritten (3) der ersten Größe (2) zu den größeren Schritten (3') der zweiten Größe (2') der verbleibende, nicht ganzzahlig aufgehende Rest (4, 4') eingestellt wird und daß die Steuerung (8, 8', 8", 8"') bei der Kalkulation der Zuordnung der Schritte (3) der kleineren Größe (2) zum nächsten Schritt (3') der größeren Größe (2') diesen Rest (4, 4') hinzunimmt.

10. Vorrichtung nach Anspruch 8 oder 9,
**dadurch gekennzeichnet,**
**daß** die Steuereinrichtung (8, 8', 8", 8"') derartig ausgebildet ist, daß sie für eine Zuordnung (6') der Schritte (3, 3') die Summe aus dem zuzuordnenden Betrag (34) mit dem Zuordnungsfehler (4') der vorherigen Zuordnung (6') von Schritten (3 und 3') bildet und bei Überschreiten des Betrages eines halben kleineren Schritts (3) auf- und bei Unterschreiten des Betrages eines halben kleineren Schritts (3) abrundet.

11. Vorrichtung nach einem der Ansprüche 8 bis 10,
**dadurch gekennzeichnet,**
**daß** die Steuereinrichtung (8, 8', 8", 8"') der Registersteuerung einer Mehrfarbendruckmaschine (1) dient, indem sie den Bildzylindern (12, 12', 12", 12"') zugeordnete Bilderzeugungseinrichtungen (14, 14', 14", 14"') zur Erzeugung von Bildpunktzeilen (33) auf den Bildzylindern (12, 12', 12", 12"') steuert.

12. Vorrichtung nach Anspruch 11,
**dadurch gekennzeichnet,**
**daß** die Steuereinrichtung (8, 8', 8", 8"') derart eingerichtet ist, daß sie die Bildpunktzeilen (33) festgelegten Winkelsequenzen (16) der Bildzylinder (12, 12', 12", 12''') zuordnet.

13. Vorrichtung nach Anspruch 12,
**dadurch gekennzeichnet,**
**daß** die Steuereinrichtung (8, 8', 8", 8''') derart eingerichtet ist, daß sie zur Erzielung einer Registerübereinstimmung der von den Farbdruckwerken (17, 17', 17", 17"') erzeugten Teilfarbenbildern (7, 7', ...) diese in Bereiche (10', 10", ..., 10ⁿ) unterteilt und diese Bereiche (10', 10", ..., 10ⁿ) einander zuordnet, wobei die Bereiche (10', 10'', ..., 10ⁿ) aus einer festgelegten Anzahl von Bildpunktzeilen (33) bestehen.

14. Vorrichtung nach Anspruch 11 oder 12,
**dadurch gekennzeichnet,**
**daß** sie Sensoren (21) zur Positionserfassung von bild- und substrattragenden Elementen (12, 12', 12", 12"', 13, 13', 13",18) aufweist und die Steuereinrichtung (8, 8', 8", 8"') derart eingerichtet ist, daß sie die Zuordnung (6, 6') aufgrund der Positionserfassung vornimmt.

15. Vorrichtung nach einem der Ansprüche 12 bis 14,
**dadurch gekennzeichnet,**
**daß** die Steuereinrichtung (8, 8', 8", 8'") derart eingerichtet ist, daß sie den Druck von Registermarken (19, 19', 19", 19"') veranlaßt, daß ein Sensor (22) zur Erfassung der Registermarken (19, 19', 19", 19"') angeordnet ist und daß die Steuereinrichtung (8, 8', 8", 8"') derart eingerichtet ist, daß sie die Daten (23) der Registermarken (19, 19', 19", 19"') derart auswertet, daß die Zuordnung der Bereiche (10', 10", ..., 10ⁿ) der Teilfarbenbilder (7, 7', ...) zueinander zur Erzielung einer Registerübereinstimmung sowie die Zuordnung (6, 6') der Bildpunktzeilen (33) zu Winkelsequenzen (16) zur Fehlerverringerung erfolgt.

16. Druckmaschine (1) mit einer Steuereinrichtung (8, 8', 8", 8"') zur Durchführung eines Verfahrens nach einem der Ansprüche 1 bis 7,
**dadurch gekennzeichnet,**
**daß** die Steuereinrichtung (8, 8', 8", 8"') derart ausgebildet ist, daß sie für eine aneinanderreihende Zuordnung (6, 6') von zwei nichtübereinstimmenden digitalen Größen (2 und 2') eine ganzzahlige Zuordnung (6, 6') der kleinen Schritte (3) der ersten Größe (2) zu einem großen Schritt (3') der zweiten Größe (2') so vornimmt, daß das Zahlenverhältnis derart verändert wird oder gleichbleibt, daß der Zuordnungsfehler (4, 4') die Breite (5) der kleineren Schritte (3) der ersten Größe (2) bei keiner Zuordnung (6, 6') erreicht.
